(19) Europäisches Patentamt
European Patent Office
Office européen des brevets

(11) **EP 3 741 516 A1**

(12) # EUROPEAN PATENT APPLICATION

(43) Date of publication:
**25.11.2020 Bulletin 2020/48**

(51) Int Cl.:
**B25J 9/16** (2006.01)        **G01C 21/34** (2006.01)
**H04L 12/721** (2013.01)

(21) Application number: **19176506.4**

(22) Date of filing: **24.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Robert Bosch GmbH**
**70442 Stuttgart (DE)**
• **University Of Southern California**
**Los Angeles, CA 90015 (US)**

(72) Inventors:
• **Alatartsev, Sergey**
**71034 Böblingen (DE)**

• **Palmieri, Luigi**
**71229 Leonberg (DE)**
• **Arras, Kai Oliver**
**70180 Stuttgart (DE)**
• **Koenig, Sven**
**Pasadena, CA 91106 (US)**
• **Cohen, Liron**
**Jerusalem,**
**96956 (IL)**

(74) Representative: **Banse & Steglich**
**Patentanwälte PartmbB**
**Patentanwaltskanzlei**
**Herzog-Heinrich-Straße 23**
**80336 München (DE)**

(54) **COMPUTER-IMPLEMENTED METHOD AND APPARATUS FOR PLANNING A PATH OR TRAJECTORY OF AN AGENT**

(57)    The invention relates to a computer-implemented method for controlling a system (1, 11) based on a trajectory wherein the trajectory is determined by means of an anytime search algorithm, which is iteratively performed, wherein after each iteration a trajectory with reduced costs is determined, the method comprising the initial steps of:
- providing (S1) a start node ($x_{start}$), a goal node ($x_{goal}$) and a graph (G) indicating nodes (V) and edges (E) connecting each two nodes, and a bound indication (w, C) decreasing with each iteration;
- providing (S1) a graph (G) including nodes (V) and allowable edges (E) between the nodes (V);
wherein for each iteration the method includes the steps of:
- creating (S3) a focal node list from a subset of nodes from the graph (G) wherein the nodes of the focal node list (FOCAL) each have a suboptimality value lower than a bound value which depends on the bound indication (w, C),
- determining (S14) a path to the goal node ($x_{goal}$) through the nodes (V) of the focal node list (FOCAL) to determine the trajectory for the current iteration.

Fig. 2

Fig. 3

**Description**

Technical Field

The present invention relates to a method for planning a path or trajectory of an agent, and particularly methods for providing a good solution of a generated trajectory in short time after the start of the trajectory planning process.

Technical Background

Motion planning algorithms can be generally applied in various ranges of applications wherein particularly a trajectory planning for a robot belongs to the most important. A variety of trajectory planning methods exists particularly for high-dimensional systems which includes optimal sampling-based planners, such as RRT*, PRM* und RRG, which are configured to find optimal solutions as the number of iterations increases. While above methods involve high computational costs techniques for increasing computational efficiency by using heuristics to guide the search are known, such as A* or LPA* for grid world planning or scheduling.

Further, heuristic-based algorithms, such as bounded suboptimal search (BSS) and bounded cost search (BCS) algorithms allow the fast generation of a suboptimal solution or one whose costs are lower than a given bound. In their anytime implementation, they quickly generate an initial good solution and, by exploiting previous search efforts, they converge to the optimal one as the number of durations increases. Known BSS algorithms use inflated heuristics or potential-based heuristics.

Focal search algorithms allow to expand states with suboptimality values with an arbitrary defined priority function.

Summary of the Invention

According to the present invention, there are provided a method for planning a trajectory or a motion of a pose of an agent, such as a robot, according to claim 1 and the apparatus and an agent according to the further independent claims.

According to a first aspect a computer-implemented method for controlling a system based on a trajectory is provided, wherein the trajectory is determined by means of an anytime search algorithm, which is iteratively performed, wherein after each iteration a trajectory with reduced costs is determined, the method comprises the initial steps of:

- providing a start node, a goal node and a graph indicating nodes and edges connecting each two nodes, and a bound indication decreasing with each iteration;
- providing a graph including nodes and allowable edges between the nodes edges;

wherein for each iteration the method includes the steps of:

- creating a focal node list from a subset of nodes from the graph wherein the nodes of the focal node list each have a suboptimality value lower than a bound value which depends on the bound indication,
- determining a path to the goal node through the nodes of the focal node list to determine the trajectory for the current iteration.

Real-time motion planning is necessary for operating an agent, such as a robot, in large and cluttered environments which may suddenly change such as by blocking paths, changed motion costs or the like. In real-time systems, therefore, trajectory planners are needed which may promptly react to environment changes and which are configured to rapidly generate high-quality trajectories in a short time. The concept is to quickly find a good solution of a given suboptimal bound for immediate application which can be thereafter successively improved as time increases.

Above method substantially applies a focal search principle to optimal sampling-based trajectory planners, so that a roadmap of trajectories in the configuration space is generated wherefrom solutions are searched. Above method provides a modified bounded-suboptimal search algorithm or bounded cost search algorithm to any focal search algorithm in form of an anytime algorithm to provide a good solution of a planned trajectory even shortly after start of the planning procedure.

Substantially, an anytime algorithm is understood as an algorithm that can return a valid solution with a planning problem at any time, even if it is interrupted before the optimal solution has been found. However, the solutions are being improved the longer the algorithm keeps running.

One characteristic of the focal search algorithm is that the bounds and the lists which allows to achieve the anytime behavior of the algorithm are updated. It may be provided that the focal search algorithm is iteratively applied on a graph which is expanded during each iteration, and after each iteration, the formed solution is reported so that quickly after the start of the planning procedure a trajectory is provided which represents a good solution in terms of a given suboptimality bound or in terms of a given cost bound.

One advantage of the above method is that a possible solution within the suboptimality bound or below the cost bound can be obtained in a short time so that the agent can act in a changing environment in a satisfying manner. Furthermore, the planning methods allow to successively improve the found solution by taking into account all the solutions found so far.

It may be provided that after each iteration the actual trajectory is used for controlling the system wherein controlling the system and performing the next iteration is carried out simultaneously.

Furthermore, the graph may be provided by recursively adding sample nodes to the existing graph wherein for all nodes of the graph edges to neighboring nodes are included into the graph which provide an allowable transition, wherein the neighboring nodes of one of the nodes is within a given perimeter around the node, which is particularly determined with the number of nodes in the actual graph.

Moreover, the bound indication may be decreased in each iteration based on a factor and/or an offset, wherein in particular the factor is depending on a minimum suboptimality value of the actual node.

It may be provided that the bound indication is a suboptimality bound with respect to a BSS (bounded suboptimality search) algorithm or a cost bound with respect to a BCS (bounded cost search) algorithm.

According to a further aspect the trajectory of movement may be iteratively determined in accordance with the above method.

Furthermore, the movable agent may be controlled along the trajectory of movement determined within each of the iterations.

According to a further aspect, a device for controlling a system based on a trajectory is provided wherein the trajectory is determined by means of an anytime search algorithm, which is iteratively performed, wherein after each iteration a trajectory with reduced costs is determined, wherein a start node, a goal node and a graph indicating nodes and edges connecting each two nodes, and a bound indication decreasing with each iteration are provided, wherein a graph including nodes and allowable edges between the nodes edges is initially provided;
wherein the device is configured to iteratively perform the steps of:

- creating a focal node list from a subset of nodes from the graph wherein the nodes of the focal node list each have a suboptimality value lower than a bound value which depends on the bound indication,
- determining a path to the goal node through the nodes of the focal node list to determine the trajectory for the current iteration.

According to a further aspect a system, such as a robot, is provided including the above device for manipulating an object along the trajectory.

According to a further aspect, a system, such as an agent, is provided including the above device for moving along the trajectory.

Brief description of the Drawings

Embodiments are described in more detail in conjunction with the accompanying drawings in which:

Figure 1          schematically shows a system including a robot arm to be controlled by means of a motion planning;

Figure 2          schematically shows a motion planning system for an agent to be moved along a path generated by means of a motion planning algorithm;

Figure 3          a flowchart for illustrating the motion planning algorithm by providing solutions for optimized motion paths/trajectories; and

Figures 4A and 4B     pseudocode algorithm illustrating the method of Figure 3.

Description of Embodiments

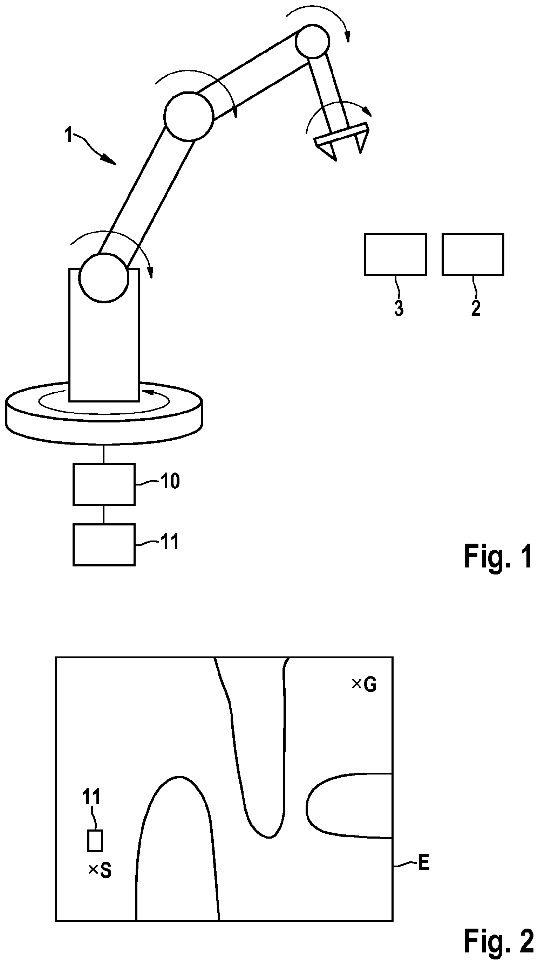

Figure 1 schematically shows a robot arm 1 for handling objects in a partly occupied environment. The environment has static or dynamic obstacles 3 to which a collision shall be avoided. The robot arm 1 is configured to convey an object 2 in all space dimensions by gripping, moving and releasing the object 2 at predefined positions along a given trajectory.

The robot arm 1 is controlled by means of a control unit 5. The control unit 5 is coupled with a sensor system 6 capable of acquiring information about the actual state of the environment indicating blocked/occupied positions and free-to-move positions.

The trajectory planning algorithm, which is continuously performed in the control unit 5 considers the information about the environment and performs a trajectory planning algorithm to find an optimized trajectory of the motions of the robot arm 1. This allows to grip and release objects 2 in the environment and move them along an optimized path of the trajectory even if the environment changes. The method for planning the corresponding trajectory is described in detail below.

Figure 2 shows another example of a system wherein an agent, such as a self-moving robot 11, shall move through an environment from a start position S to a goal position G along an optimized path on a roadmap R. The roadmap R may change e.g. due to "traffic" or other environmental conditions so that a replanning of the motion path may be required regularly. The robot 11 has a control unit 15 coupled with a sensor system 16. The control unit 15 is configured to perform a motion planning algorithm to continuously update an optimized motion path based on a changed roadmap.

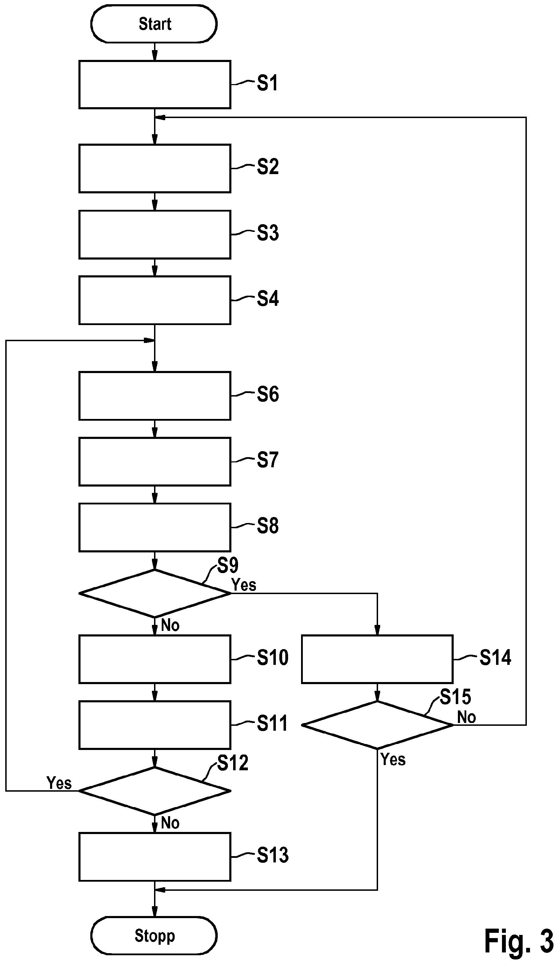

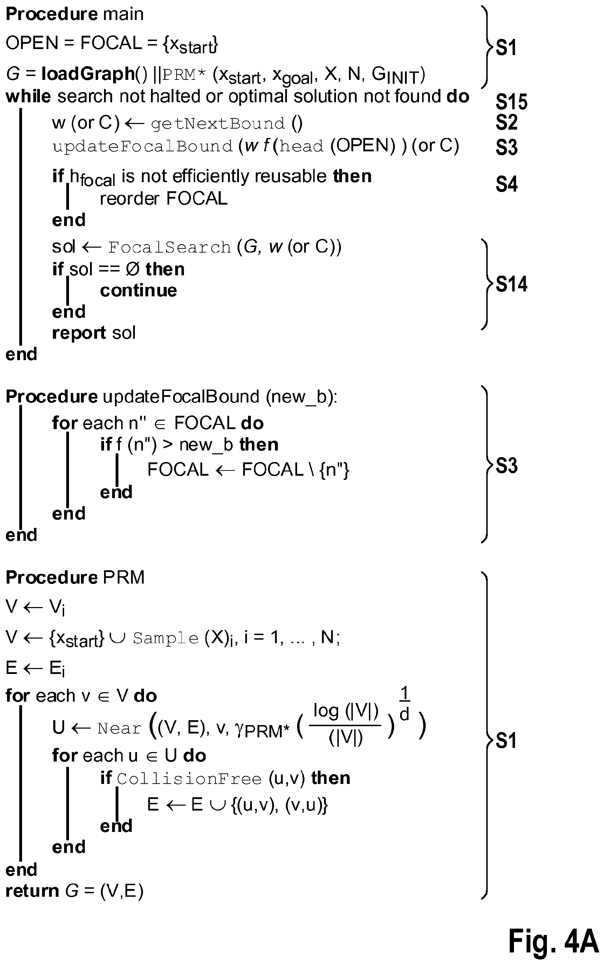

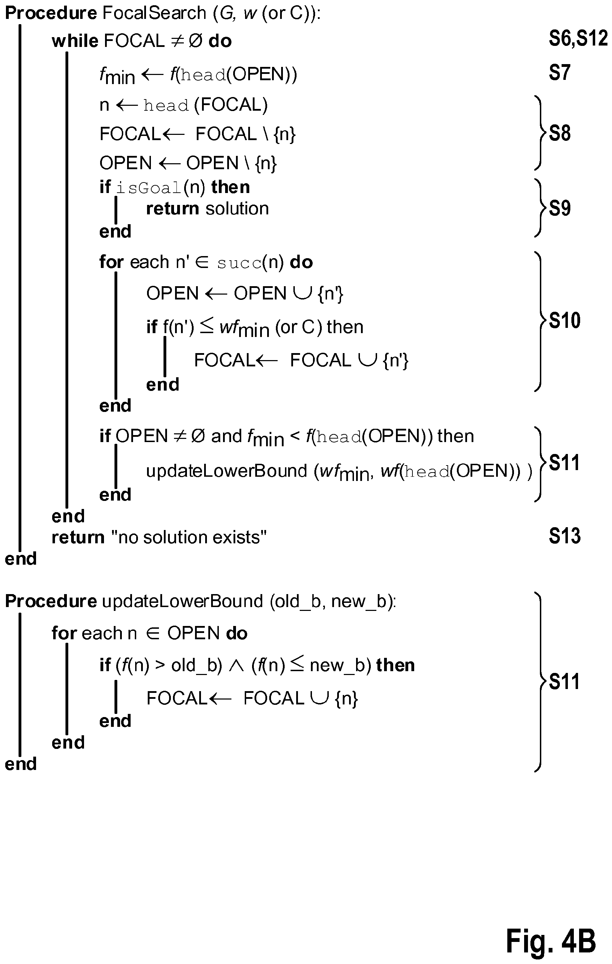

Figure 3 shows a flowchart of a motion planning algorithm which provides a solution within a suboptimality bound wherein the solution is iteratively improved. The flowchart is further explained by the pseudocodes as shown in Figure 4.

In step S1, an initial open node list OPEN and focal node list FOCAL are both set up with a start node $x_{start}$. In general, the open node list OPEN corresponds to a list of nodes which is sorted in increasing orders of their suboptimality value f. Further, the focal node list is defined as a subset of OPEN where all nodes x of FOCAL have a suboptimality value f(x) of lower than the product of the minimum suboptimality value of all nodes of the open node list OPEN and a given suboptimality bound w or have a suboptimality value f(x) of lower than a given cost-bound C, i.e.

$$FOCAL = \{n \in OPEN : f(n) \leq w f_{min}\} \; with \; w > 1$$

$$FOCAL = \{n \in OPEN : f(n) \leq C\} \; with \; C \geq 0$$

Generally the function f is defined of two terms: $f(n) = g(n) + w * h(n)$, wherein g(n) is a cost function of a path from the start node $x_{start}$ to the current node n (e.g. an indication of the path length). w is the suboptimality bound, i.e. the suboptimal weight (w >= 1, if set to 1 we compute the optimal solution). h(n) corresponds to estimated costs from the node n to the goal node (cost-to-go), and it usually does not overestimate the true cost (i.e. path length) from the node n to the goal.

Furthermore a graph G is given defining a list of nodes $V_l$ (robot arm 1 joint values or positions of the robot 11) and edges $E_l$ (movable connections between the nodes) are given to form a graph such as a roadmap and/or a trajectory portion e.g. of the robot arm 11 or the robot 1. The graph G can be initially set or generated by procedure PRM.

The graph G is generated by means of the function PRM which requires the start node $x_{start}$, the goal node $x_{goal}$, X being the configuration space / state space indicating all the space of all possible robot configurations, N being the number of nodes to be considered in the roadmap to be generated, G being an initial graph. In the algorithm we provide an initial empty one. The PRM procedure starts with a list of nodes V including a start node $x_{start}$, some sample nodes generated by the function Sample(X) as well as previously determined nodes $V_i$. Furthermore, previously determined edges E are maintained.

For each considered node v of the list of nodes V one or more additional edges E to neighboring nodes u of the list of nodes V are added to the graph G wherein the neighboring nodes u are respectively in a defined neighborhood to each node of the list of nodes V determined by the NEAR function. The parameters of the NEAR function are the graph G=(V,E) in which the neighboring nodes shall be searched, v as the node for which the neighbors shall be found, $\gamma_{PRM}$ as a constant, |V| is the size of the graph, i.e. number of vertices/nodes, and d as the state space dimension (i.e. number of joints of a robotic arm). Further an additional edge E is added only in case they allow a condition-free transition (determined by the function CollisionFree(u,v)) along the path portion or trajectory portion between the considered node v and the newly added additional node u. The newly generated graph G is then returned to the main procedure.

So, the search algorithm is iteratively applied on the graph/roadmap so that it is continuously expanded. The planning algorithm continuously reports the solution and stops when the optimal solution is found or specific terminal conditions are triggered. By using the search algorithm PRM the configuration space is explored by drawing the optimal probabilistic roadmap. Each time the algorithm extends the roadmap, it first draws randomly selected node samples and checks if they are collision-free.

Then, the search algorithm focuses on the nodes and adds neighboring nodes to achieve optimality results of the neighborhood with respect to the radius $r_{PRM} = 1$ $\gamma_{PRM} * \left(\dfrac{\log|V|}{|V|}\right)^{\frac{1}{d}}$ with $|V|$ being the total number of nodes in the graph G. Only collision-free connections are stored in the graph G.

In step S2, a suboptimality bound w or a cost-bound C is provided/updated for the current iteration.

Different options for updating the suboptimality bound w or the cost bound C can be chosen. Basically, for each iteration, the rate defined by the suboptimality bound w or the cost bound C can be more and more decreased. Furthermore, the suboptimality bound w bound can be decreased by $W_i = \dfrac{w_{i-1}}{f_{min}} - \epsilon$ where $\dfrac{1}{f_{min}}$ determines a factor (<1) and $\varepsilon$ a constant positive offset. Furthermore, the cost bound C can be decreased by a constant factor (<1) or by a constant positive offset.

In step S3, the focal node list is updated (procedure UpdateFocalBound()) by the suboptimality bound w of the best node of an open node list OPEN multiplied with the suboptimality bound w given in step S1. Alternatively, the focal node list is updated by a cost bound value given as the cost bound C given in step S1. The "best" node of the focal node list is defined as the one with the minimum value of h_focal. The "best" node of the open node list is defined as the one with the minimum value of f.

The updating is made so that each node n of the focal node list FOCAL which has a suboptimality value f higher than the product of an actual suboptimality bound w and the suboptimality value f of the first node of the open node list OPEN is removed from the focal node list. If a cost bound C is given in step S1 instead of the suboptimality bound w, each node n of the focal node list FOCAL which has a cost value higher than the cost bound C is removed from the focal node list FOCAL.

In step S4, the focal node list FOCAL is reordered if the priority function $h_{focal}$ is not efficiently reusable. The priority function $h_{focal}$ is efficiently reusable if it does not depend on the suboptimality bound w or the cost bound C, respectively. The priority function can be preset. For instance, the priority function can indicate a distance to the goal node. The ordering of the focal node list FOCAL is made according to the suboptimality values f of its nodes n from lowest to highest values so that the first element of the focal node list FOCAL function retrurns the node with the minimum value of $h_{focal}$.

In step S6, a minimum suboptimality value $f_{min}$ is set as the sub-optimality value f(x) of the first element (head function) of the open node list OPEN.

In step S7 a considered node n is selected as the first element of the focal node list FOCAL.

In step S8, the focal node list FOCAL and the open node list OPEN are diminished by the so selected considered node n.

If it is found in step S9 that the considered node corresponds to the goal node xgoal (Alternative: Yes), then the solution sol is given by the focal node list FOCAL which can be reported as a result of the actual iteration and continued with step S14. Otherwise it is continued with step S10. The solution sol is generated by backtracking, i.e. each node keeps a pointer to its parent node. Starting from the goal, its parent can be followed, the parent of its parent and so on, until the start node is reached. Every visited node (i.e. parent of parent) is added to the solution.

Due to the anytime process the method is not halted here but is continued to further improve the found solutions. Therefore, in step S10, for each of the nodes n' which are successors of the considered node n in the graph G (the function succ() represent all the outgoing edges from a vertex/node), the open node list OPEN is updated with the successor node n' and the focal node list FOCAL is only updated with the successor node n' if the suboptimality value of the successor node f(n') is lower than the suboptimality bound value $wf_{min}$ which is the product of the suboptimality bound w and the minimum suboptimality value $f_{min}$ determined before.

At each iteration, the algorithm initially tops the head of the focal node list FOCAL and removes it also from the open node list OPEN. If this node is the goal, the solution can be returned, otherwise the respective node is expanded by including appropriate successors. The successors are added to the open node list OPEN and also to the focal node list FOCAL, if its suboptimality value f() is lower than the current suboptimality bound value $wf_{min}$. In case $f_{min}$ is increased during the previous operations, the focal node list FOCAL needs to be updated accordingly.

In step S11 the lower bound is updated if the minimum suboptimality value fmin is lower than the suboptimality value f(x) of the first element (head()) of the open node list OPEN.

The update is performed with the suboptimality bound value of the first element (head()) of the open node list OPEN which corresponds to the product of the suboptimality bound w and the value f(x) of the first element (head()) of the open node list OPEN. If the update shall be carried out the so obtained suboptimality bound value is the new suboptimality limit new_b wherein each node k in the open node list OPEN is added to the focal node list FOCAL if its suboptimality value f(k) is higher than the former minimum suboptimality value $f_{min}$ and lower or equal than the new suboptimality limit new_b.

In an initial phase, the algorithm can load an existing off-line generated roadmap or explores the configuration base up to a given number of samples. Successively at each iteration, the suboptimality bound w or the cost bound C, respectively, and the open node list OPEN and the focal node list FOCAL, are updated, accordingly. The update of the suboptimality bound w or the cost bound C, respectively, and of the lists allows to achieve the anytime behavior of the algorithm.

The open node list OPEN is used to keep track of the vertices to be inserted into the focal node list FOCAL. The minimum suboptimality value $f_{min}$ of all nodes in the open node list OPEN at each iteration, all the vertices in the open node list OPEN which has a suboptimality value f(x) which is lower than the suboptimality bound value (product of the given suboptimality bound w and the minimum suboptimality value fmin) or lower than the cost bound C are moved into the focal node list FOCAL.

In step S12, it is checked if the focal node list FOCAL still contains a node. If yes, it is returned to step S6, otherwise it is continued with step S13.

In step S13 it is reported that no solution exists and the algorithm is halted.

In step S14 the intermediate solution found in steps S9 is reported. The intermediate solution represents a trajectory which can be already used for controlling the system.

In step S15, it is checked if a termination condition is met, which may stop the iteration. The termination condition may be to satisfied by reception of an external signal or satisfied by reaching a maximum planning time, an achievement of a given total costs C or a given suboptimality bound w or the like. If the termination condition is satisfied (Alternative. yes) the algorithm is halted, otherwise (Alternative. no) the algorithm is continued with step S2.

The above trajectory planning method implements an asymptotically optimal multi-query sampling-based option learning algorithm that incrementally solves the problem by performing anytime focal searches on a clearly expanded graph (roadmap). Above algorithm improves the reported solution approaching the optimal solution as time increases. The planning algorithm explores the state space by drawing a probabilistic roadmap and extracts solutions from it by performing anytime focal search.

At each iteration, the search algorithm is performed with the updated suboptimality bound value $wf_{min}$. At each iteration, the algorithm moves nodes into the focal node list FOCAL which have suboptimality values higher than the new suboptimality bound value $wf_{min}$.

The updating of the suboptimality bound w or of the cost bound C with decreasing values for each iteration guarantees a sequence of solutions each with a better suboptimality guarantee than the previous ones so that a convergence towards the optimal trajectory can be found. As the suboptimality/cost bound are used to decide whether to prune additional nodes into the graph G it may be provided that the solution costs are strictly decreasing.

**Claims**

1. Computer-implemented method for controlling a system (1, 11) based on a trajectory wherein the trajectory is determined by means of an anytime search algorithm, which is iteratively performed, wherein after each iteration a trajectory with reduced costs is determined, the method comprising the initial steps of:

   - providing (S1) a start node ($x_{start}$), a goal node ($x_{goal}$) and a graph (G) indicating nodes (V) and edges (E) connecting each two nodes, and a bound indication (w, C) decreasing with each iteration;
   - providing (S1) a graph (G) including nodes (V) and allowable edges (E) between the nodes (V);

   wherein for each iteration the method includes the steps of:

   - creating (S3) a focal node list from a subset of nodes from the graph (G) wherein the nodes of the focal node list (FOCAL) each have a suboptimality value lower than a bound value which depends on the bound indication (w, C),
   - determining (S14) a valid path to the goal node ($x_{goal}$) through the nodes (V) of the focal node list (FOCAL).

2. Method according to claim 1, where after each iteration the actual trajectory is used for controlling the system (1, 11) wherein controlling the system and performing the next iteration is carried out simultaneously.

3. Method according to claim 1 or 2, wherein the graph (G) is provided by recursively adding sample nodes to an given graph (G) wherein for all nodes of the graph edges to neighboring nodes are included into the graph (G) which provide an allowable transition, wherein the neighboring nodes of one of the nodes is within a given perimeter around the node, which is particularly determined with the number of nodes in the actual graph (G).

4. Method according to any of the claims 1 to 3, wherein the bound indication (w, C) is decreased in each iteration based on a factor and/or an offset, wherein in particular the factor is depending on a minimum suboptimality value of the actual node.

5. Method according to any of the claims 1 to 4, wherein the bound indication (w, C) is a suboptimality bound (w) with respect to a BSS (bounded suboptimality search) algorithm or a cost bound (C) with respect to a BCS (bounded cost search) algorithm..

6. Method for controlling a movable agent, wherein the trajectory of movement is iteratively determined in accordance with the method of any of the claims 1 to 5.

7. Method according to claim 6, wherein the movable agent is controlled along the trajectory of movement determined within each of the iterations.

8. Device for controlling a system based on a trajectory wherein the trajectory is determined by means of an anytime search algorithm, which is iteratively performed, wherein after each iteration a trajectory with reduced costs is determined, wherein a start node, a goal node and a graph (G) indicating nodes and edges connecting each two nodes, and a bound indication (w, C) decreasing with each iteration are provided, wherein a graph (G) including nodes and allowable edges between the nodes is initially provided;
wherein the device is configured to iteratively perform the steps of:

- creating a focal node list (FOCAL) from a subset of nodes from the graph (G) wherein the nodes (n) of the focal node list (FOCAL) each have a suboptimality value lower than a bound value which depends on the bound indication (w, C),
- determining a valid path to the goal node ($x_{goal}$) through the nodes of the focal node list (FOCAL).

9. System, such as a robot, including the device according claim 8 for manipulating an object along the trajectory.

10. System, such as an agent, including the device according claim 8 for moving along the trajectory.

11. A computer program product comprising a computer readable medium, having thereon: computer program code means, when said program is loaded, to make the computer execute procedure to perform all steps of the method according to any of the claims 1 to 7.

12. A machine readable medium, having a program recorded thereon, where the program is to make the computer execute a method according to any of the claims 1 to 7.

Fig. 1

Fig. 2

Fig. 3

**Procedure** main

OPEN = FOCAL = {$x_{start}$}

$G$ = **loadGraph**() ‖PRM* ($x_{start}$, $x_{goal}$, X, N, $G_{INIT}$) ⎫ S1

**while** search not halted or optimal solution not found **do**     S15

    w (or C) ← getNextBound ()     S2

    updateFocalBound (*w f*(head (OPEN) ) (or C)     S3

    **if** $h_{focal}$ is not efficiently reusable **then**     S4
        | reorder FOCAL
    **end**

    sol ← FocalSearch (*G, w* (or C))  ⎫
    **if** sol == ∅ **then**     S14
        | **continue**
    **end**
    **report** sol
**end**

**Procedure** updateFocalBound (new_b):

    **for** each n" ∈ FOCAL **do**  ⎫
        **if** f (n") > new_b **then**
            | FOCAL ← FOCAL \ {n"}     S3
        **end**
    **end**
**end**

**Procedure** PRM

V ← $V_i$

V ← {$x_{start}$} ∪ Sample (X)$_i$, i = 1, ... , N;

E ← $E_i$

**for** each v ∈ V **do**

    U ← Near $\left((V, E), v, \gamma_{PRM^*} \left(\frac{\log (|V|)}{(|V|)}\right)^{\frac{1}{d}}\right)$     S1

    **for** each u ∈ U **do**
        **if** CollisionFree (u,v) **then**
            | E ← E ∪ {(u,v), (v,u)}
        **end**
    **end**
**end**
**return** $G$ = (V,E)

## Fig. 4A

**Procedure** FocalSearch (*G, w* (or C)):

    **while** FOCAL $\neq \varnothing$ **do**            S6,S12

         $f_{min} \leftarrow f(\text{head}(\text{OPEN}))$      S7

         n $\leftarrow$ head (FOCAL)

         FOCAL $\leftarrow$ FOCAL \ {n}      S8

         OPEN $\leftarrow$ OPEN \ {n}

         **if** isGoal(n) **then**

             **return** solution      S9

         **end**

         **for** each n' $\in$ succ(n) **do**

             OPEN $\leftarrow$ OPEN $\cup$ {n'}

             **if** f(n') $\leq$ $wf_{min}$ (or C) **then**      S10

                 FOCAL $\leftarrow$ FOCAL $\cup$ {n'}

             **end**

         **end**

         **if** OPEN $\neq \varnothing$ and $f_{min} <$ f(head(OPEN)) **then**

             updateLowerBound ($wf_{min}$, $wf$(head(OPEN)) )   S11

         **end**

     **end**

     **return** "no solution exists"      S13

**end**


**Procedure** updateLowerBound (old_b, new_b):

     **for** each n $\in$ OPEN **do**

         **if** (*f*(n) > old_b) $\wedge$ (*f*(n) $\leq$ new_b) **then**

             FOCAL $\leftarrow$ FOCAL $\cup$ {n}      S11

         **end**

     **end**

**end**

# Fig. 4B

Europäisches
Patentamt

European
Patent Office

Office européen
des brevets

# EUROPEAN SEARCH REPORT

Application Number

EP 19 17 6506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/125893 A1 (TILOVE ROBERT BRUCE [US] ET AL) 29 May 2008 (2008-05-29) * paragraph [0008] * * paragraph [0015] - paragraph [0018] * * paragraph [0032] - paragraph [0037] * * paragraph [0041] - paragraph [0042] * * figures 1, 2, 3 * | 1-12 | INV. B25J9/16 G01C21/34 H04L12/721 |
| A | KAVRAKI L E ET AL: "PROBABILISTIC ROADMAPS FOR PATH PLANNING IN HIGH-DIMENSIONAL CONFIGURATION SPACES", IEEE TRANSACTIONS ON ROBOTICS AND AUTOMATION, IEEE INC, NEW YORK, US, vol. 12, no. 4, 1 August 1996 (1996-08-01) , pages 566-580, XP000640987, ISSN: 1042-296X, DOI: 10.1109/70.508439 * the whole document * | 1-12 | |
| A | WO 2016/122840 A1 (UNIV DUKE [US]) 4 August 2016 (2016-08-04) * the whole document * | 1-12 | |
| A | US 8 825 207 B2 (KIM CHYON HAE [JP]; SUGANO SHIGEKI [JP] ET AL.) 2 September 2014 (2014-09-02) * the whole document * | 1-12 | TECHNICAL FIELDS SEARCHED (IPC) B25J G05B G01C H04L |
| A | CN 103 278 164 B (UNIV PEKING SHENZHEN GRAD SCHO) 18 November 2015 (2015-11-18) * the whole document * | 1-12 | |
| A | BOHLIN R: "Path planning using lazy PRM", ROBOTICS AND AUTOMATION, 2000. PROCEEDINGS. ICRA '00. IEEE INTERNATIONAL CONFERENCE ON, IEEE, PISCATAWAY, NJ, USA, vol. 1, 24 April 2000 (2000-04-24), pages 521-528, XP010500267, ISBN: 978-0-7803-5886-7 * the whole document * | 1-12 | |

The present search report has been drawn up for all claims

| Place of search | Date of completion of the search | Examiner |
|---|---|---|
| The Hague | 28 November 2019 | Falconi, Riccardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 17 6506

This annex lists the patent family members relating to the patent documents cited in  the above-mentioned European search report.
The members are as contained in the European Patent Office EDP file on
The European Patent Office is in no way liable for these particulars which are merely given for the purpose of information.

28-11-2019

| Patent document cited in search report | | | Publication date | Patent family member(s) | | | Publication date |
|---|---|---|---|---|---|---|---|
| US 2008125893 | A1 | | 29-05-2008 | NONE | | | |
| WO 2016122840 | A1 | | 04-08-2016 | CN | 107206592 | A | 26-09-2017 |
| | | | | EP | 3250347 | A1 | 06-12-2017 |
| | | | | JP | 6598090 | B2 | 30-10-2019 |
| | | | | JP | 2018505788 | A | 01-03-2018 |
| | | | | US | 2018001472 | A1 | 04-01-2018 |
| | | | | WO | 2016122840 | A1 | 04-08-2016 |
| US 8825207 | B2 | | 02-09-2014 | JP | 5774361 | B2 | 09-09-2015 |
| | | | | JP | 2012234262 | A | 29-11-2012 |
| | | | | US | 2012277907 | A1 | 01-11-2012 |
| CN 103278164 | B | | 18-11-2015 | NONE | | | |

EPO FORM P0459

For more details about this annex : see Official Journal of the European Patent Office, No. 12/82